# DEMANDE DE BREVET EUROPEEN

(11) **EP 0 935 387 A1**
(43) Date de publication de la demande: **11.08.1999**
(21) Numéro de dépôt: 98102003.5
(22) Date de dépôt: 05.02.1998
(51) Int. Cl.: H04N 5/232, H04N 5/335

(54) **Appareil de prise de vues avec viseur électronique à faible consommation**

(71) Demandeur: ASULAB S.A., CH-2501 Bienne (CH)
(72) Inventeur: Grupp, Joachim, 2003 Neuchâtel (CH); Dinger, Rudolf, 2024 Saint-Aubin (CH); Wiget, Fridolin, 2006 Neuchâtel (CH)
(74) Mandataire: Thérond, Gérard Raymond

(57) **Abrégé**

Appareil de prise de vue comportant un objectif; un capteur (2) organisé selon une première structure matricielle de cellules photo-électriques; un convertisseur analogique-digital (31); un microprocesseur (33); une mémoire (32) et une cellule d'affichage électrooptique (40) organisée selon une seconde structure matricielle.

Les cellules photo-électriques génèrent chacune un signal électrique fonction de l'intensité de la lumière captée. Le convertisseur (31) transforme le signal électrique analogique en un signal numérique. Le microprocesseur (33) traite les signaux issus du convertisseur (31) et met en mémoire (32).

Cet appareil est caractérisé en ce qu'il comporte en outre un circuit électronique de liaison (37), pour relier le capteur (2) à la cellule d'affichage (40), agencé de manière à amplifier les signaux de type analogique issus du capteur (2), pour pouvoir les appliquer, sous forme analogique, à la cellule d'affichage (40).

## Description

La présente invention concerne les appareils de prise de vues et plus particulièrement un appareil photographique ou une caméra enregistrant des images sous forme numérique. Dans ce type d'appareils, les images sont stockées sous forme de signaux digitaux, sur un support permettant une lecture électronique, magnétique ou optique.

De tels appareils sont connus de l'homme du métier. Un appareil photographique de ce type est par exemple décrit dans le brevet US 5,541,654. Il comporte de manière classique un capteur formé d'une matrice de cellules photo-électriques, une électronique de traitement des images et une cellule d'affichage servant de viseur.

L'électronique de traitement des images comprend une mémoire tampon, un convertisseur analogique-digital (ADC), un microprocesseur pour la lecture des images et la gestion des signaux issus de la mémoire tampon, une mémoire de stockage des prises de vue et un convertisseur digital-analogique (DAC).

Dans un tel appareil, les signaux électriques captés aux bornes des cellules photo-électriques sont traités par le convertisseur analogique-digital Puis par le microprocesseur, avant d'être adressés à la cellule d'affichage qui tient lieu de viseur, au travers d'un convertisseur digital-analogique, et de pouvoir être mis en mémoire si l'utilisateur décide d'effectuer la prise de vue.

Chacune de ces opérations est coûteuse en énergie, notamment celle correspondant à la phase de visée. En effet, le temps nécessaire au cadrage de la prise de vue est généralement beaucoup plus long que la prise de vue en elle-même. En d'autres termes, une part importante de la consommation d'énergie est utilisée durant la phase préparatoire.

Le but de la présente invention est de palier cet inconvénient des appareils digitaux de l'art antérieur en réduisant la consommation d'énergie durant cette phase préparatoire.

A cet effet, l'invention a pour objet un appareil de prise de vue comportant :
- un objectif,
- un capteur comprenant des cellules photo-électriques définissant chacune un pixel et organisées selon une première structure matricielle,
- un convertisseur analogique-digital,
- un microprocesseur,
- une mémoire,
- une cellule d'affichage électrooptique à matrice de points organisés selon une seconde structure matricielle,
   dans lequel les cellules photo-électriques du capteur sont activées par un faisceau lumineux focalisé par ledit objectif et génèrent chacune un signal électrique analogique fonction de l'intensité de la lumière captée, ledit signal analogique étant transformé par le convertisseur en un signal digital, destiné à être traité par ledit microprocesseur pour être introduit dans la mémoire,
      caractérisé en ce qu'il comporte en outre un circuit électronique de liaison, pour relier ledit capteur à la cellule d'affichage, agencé de manière à amplifier les signaux de type analogique issus dudit capteur, pour pouvoir les appliquer, sous forme analogique, à ladite cellule d'affichage.

Selon une autre caractéristique de l'invention, une réduction supplémentaire de la consommation d'énergie est obtenue en donnant à la première structure matricielle une conformation particulière corrélée avec la conformation de la seconde structure matricielle. A cet effet, ladite première structure matricielle comporte un nombre de lignes et un nombre de colonnes qui sont un multiple du nombre de lignes et du nombre de colonnes de la seconde structure matricielle, et les cellules photo-électriques sont organisées en blocs ayant chacun un nombre de lignes et un nombre de colonnes égal audit multiple. Le circuit de liaison traite les signaux issus de l'une au moins des cellules photo-électriques de chacun desdits blocs pour l'appliquer à l'un des points de la cellule d'affichage.

Selon un premier mode de réalisation, le circuit de liaison est agencé pour combiner les signaux issus de toutes les cellules photo-électriques de chacun desdits blocs.

Selon un deuxième mode de réalisation, le circuit de liaison est agencé pour combiner les signaux issus d'une partie seulement des cellules de chacun desdits blocs, cette partie pouvant être réduite à une seule cellule.

Une autre caractéristique de la présente invention est de réaliser un affichage de l'information sur le dispositif de visée qui soit aussi rapide que possible. A cet effet, le circuit de liaison comporte au moins un circuit d'amplification avec au moins un amplificateur pour amplifier les signaux issus desdits blocs.

Une autre caractéristique de la présente invention est de réaliser un circuit de commande du dispositif de visée qui soit aussi simple et économique que possible. A cet effet, le circuit d'amplification du circuit de liaison comporte un nombre d'amplificateurs sous-multiple du nombre de colonnes, et le circuit de liaison comporte en outre des circuits de multiplexage avec chacun des circuits décodeurs de colonnes en nombre égal au rapport (m) entre le nombre de colonnes et le nombre d'amplificateurs, pour assurer une commande multiplexée des colonnes de ladite cellule d'affichage.

On peut en outre prévoir que le circuit d'amplification soit non linéaire de façon à adapter la réponse optique de l'afficheur à la réponse optique du capteur.

L'invention sera mieux comprise à la lecture de la description qui va suivre, donnée à titre d'exemple non limitatif, et dans lequel :
- la figure 1 montre un schéma fonctionnel d'un appareil de prise de vue selon l'état de la technique;
- la figure 2 est un schéma fonctionnel d'un appareil selon l'invention; et
- les figures 3 et 4 représentent deux variantes d'une partie de l'appareil représenté schématiquement à la figure 2.

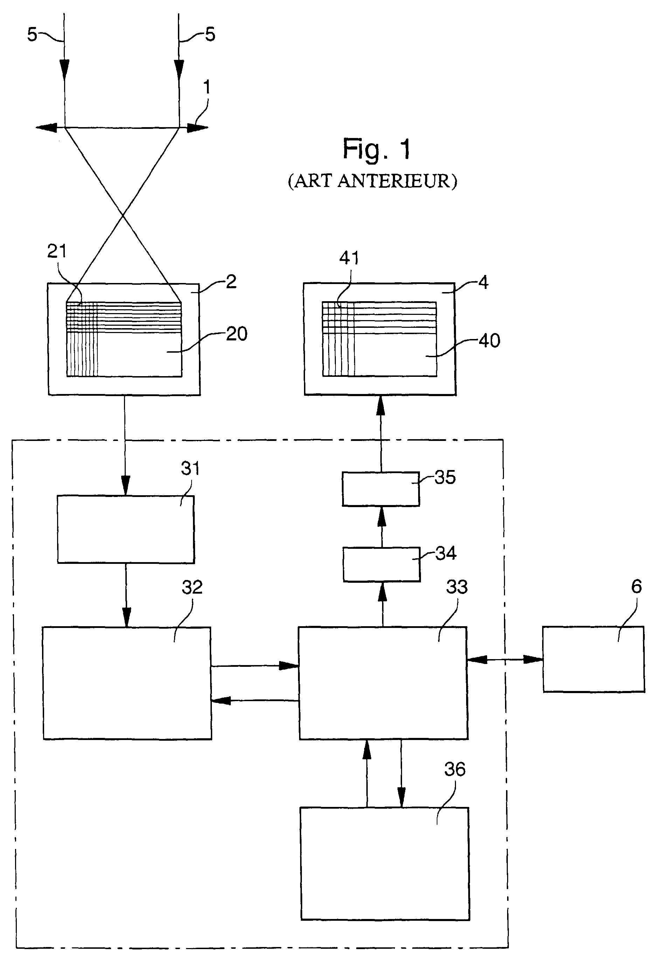

Les appareils de prise de vues enregistrant des informations sous forme numériques comportent de manière classique et comme cela est représenté schématiquement à la figure 1, un objectif 1, un capteur 2 formé d'une matrice 20 de cellules photo-électriques 21, une électronique de traitement des informations 3 et un viseur 4, réalisé au moyen d'une cellule d'affichage électrooptique 40 à cristaux liquides. Cette dernière présente également une structure matricielle, avec des points d'affichage 41 à l'intersection de chaque ligne et chaque colonne que comporte cette matrice.

L'objectif 1 focalise sur le capteur 2 un faisceau 5 de lumière provenant de l'objet à saisir.

L'électronique de traitement 3 comprend un convertisseur analogique-digital 31, une mémoire tampon 32, un microprocesseur 33, un convertisseur digitalanalogique 34, un circuit de commande 35 de la cellule 40 et une mémoire de stockage 36 des informations sélectionnées.

L'appareil comporte en outre un dispositif de commande 6 qui, ne faisant pas partie de l'invention, ne sera pas décrit de manière détaillée.

Lorsqu'un opérateur souhaite effectuer une prise de vue, il enclenche son appareil au moyen d'un commutateur faisant partie du dispositif de commande 6. Le faisceau de lumière 5, focalisé par l'objectif 1, active les cellules photo-électriques 21 du capteur 2.

Les signaux analogiques issus de chacune des cellules sont introduits dans la mémoire tampon 32 après transformation en signaux digitaux par le convertisseur 31 (ADC). Ces signaux sont ensuite traités par le microprocesseur 33. Lors de cette opération, le microprocesseur 33 compresse les informations, de manière à réduire le volume de mémoire nécessaire avant de les introduire dans la mémoire 36, en vue de leur utilisation ultérieure. D'autre part les informations se trouvant dans la mémoire tampon 32 sont adressées au convertisseur digital-analogique 34 à travers le microprocesseur 33. Celui-ci transforme les signaux numériques en des signaux analogiques d'intensité adaptée à la commande de la cellule d'affichage du viseur digital 4, au moyen du circuit de commande 35.

Il est également possible de retrouver dans la mémoire 36 les images antérieurement stockées, pour les afficher sur la cellule 40, après traitement par le microprocesseur 33.

Pendant l'opération de visée permettant le cadrage de l'image à saisir, la mémoire tampon 32 n'est pas utilisée. Les signaux issus des cellules photo-électriques 21 étant de type analogique sont transformés en signaux digitaux par un convertisseur analogique - digital 31 (ADC), traités mathématiquement par le microprocesseur 33 pour être ensuite transformés en signaux analogique par un convertisseur digital-analogique 34 (DAC) pour afficher l'image sur le viseur 4. Lors de cette opération de visée, l'image saisie par le capteur 2 doit être transférée rapidement sur le viseur pour permettre à l'utilisateur d'avoir une visée juste, même lorsque l'image à saisir est en mouvement. Pour cela l'image doit être réactivée avec une fréquence inférieure à 0,5 Hz. Cela exige d'avoir une fréquence d'opération élevée pour le ADC, le microprocesseur et le DAC, ce qui provoque une charge de courant de quelques centaines de mA et donc une consommation d'énergie très élevée. Ce mode de viseur présente donc un inconvénient certain au niveau de la durée de vie des piles ou des accumulateurs alimentant de tels appareils digitaux.

L'utilisation d'un capteur 2, formé de cellules photo-électriques 21 qui sont réparties en une structure matricielle de 480 lignes et 640 colonnes, soit 307'200 points, donne des résultats tout à fait satisfaisants.

Pour disposer d'une information permettant d'afficher la couleur, le processeur doit traiter trois signaux pour chaque point, correspondant respectivement au rouge, au vert et au bleu. En d'autres termes, l'affichage d'une image sur le viseur nécessite le traitement de 921'600 informations analogiques. Bien que les circuits électroniques aient été perfectionnés, le traitement d'un tel volume d'informations implique néanmoins une consommation importante d'énergie et un temps de traitement relativement long. Une première économie peut être faite en affichant l'image en noir et blanc, ce qui conduit à traiter un nombre d'informations réduit d'un facteur 3.

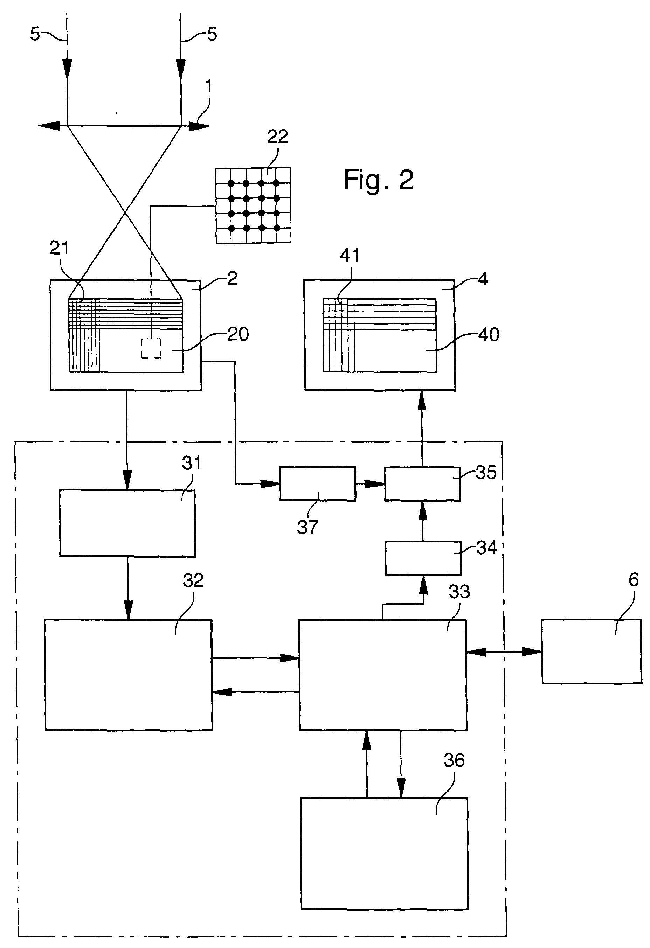

L'appareil selon l'invention, schématiquement représenté à la figure 2, permet de réduire encore plus cette consommation, ainsi que le temps nécessaire pour commander la cellule d'affichage. Il comporte tous les composants de l'appareil de la figure 1. Ces composants portent les mêmes références. De plus, l'électronique 3 comprend un circuit de liaison 37, qui assure une liaison directe entre le capteur 2 et la cellule 40, c'est-à-dire sans que les informations ne soient numérisées. La numérisation n'intervient que lorsque l'opérateur a décidé de mémoriser une photo.

A ce moment-là, les informations recueillies par le capteur 2 sont mémorisées dans la mémoire 32, avant d'être traitées et compressées par le microprocesseur 33. Elles sont ensuite introduites dans la mémoire 36, comme cela a été expliqué plus haut.

La matrice du capteur 2 comporte par exemple, comme indiqué précédemment 480 lignes et 640 colonnes.

Par ailleurs, le viseur 4 est réalisé au moyen d'une cellule d'affichage 40 à cristaux liquides multiplexée, avec 120 lignes et 160 colonnes, soit 19'200 points d'affichage ou pixels. Etant donné la dimension du viseur, une telle résolution est en général suffisante.

Avec un tel système, chaque pixel 41 de la cellule 40 correspond à un bloc 22 de cellules photo-électriques 21, de quatre lignes et quatre colonnes de côté, comportant ainsi seize cellules 21. Le circuit de liaison 37 relie le capteur 2 à la cellule d'affichage 40, comme expliqué ci-dessous.

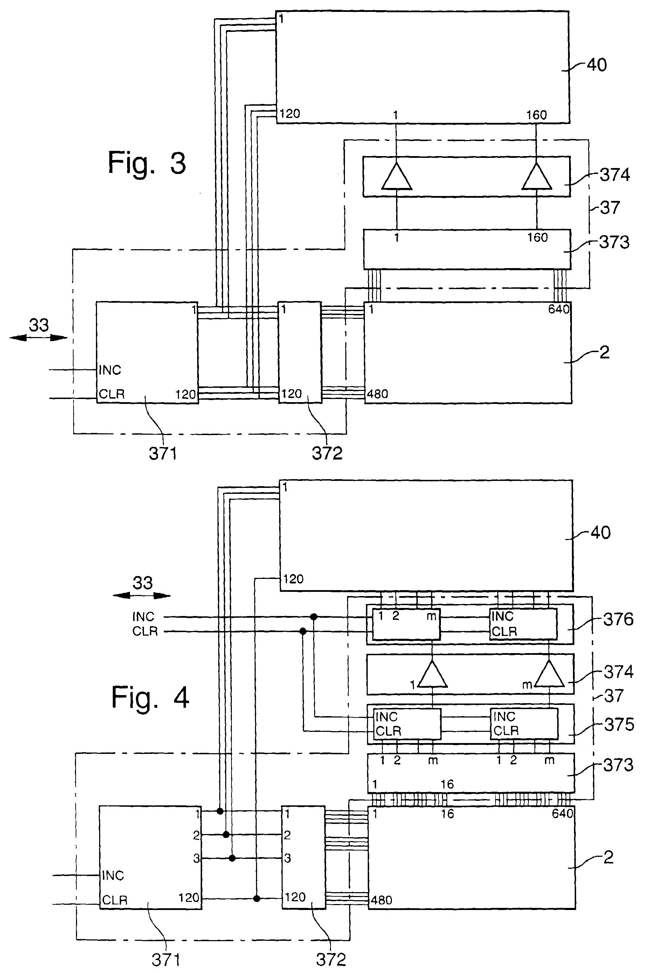

Le circuit de liaison 37 est représenté de manière plus détaillée sur les figures 3 et 4, selon deux variantes qui sont précisées ci-après.

La variante de la figure 3 montre schématiquement et plus particulièrement le capteur 2, la cellule 40 et le circuit 37. Ce dernier est construit pour pouvoir réagir de la manière la plus rapide possible.

Le circuit 37 comporte un circuit décodeur de lignes 371, un circuit d'adressage 372, un circuit de regroupement 373 et un circuit d'amplification 374.

Le circuit décodeur de lignes 371 permet de commander la cellule 40 de manière séquentielle et de la synchroniser sur la base des informations provenant du capteur 2. Il reçoit à cet effet du microprocesseur 33 (non représenté sur la figure 3), sur son entrée INC, des signaux d'incrémentation. A chaque signal, le circuit décodeur 371 passe d'une ligne à la suivante, balayant ainsi les 120 lignes de la cellule 40 du viseur 4 et adressant un message au circuit d'adressage 372 qui commande la lecture du capteur 2.

Le circuit d'adressage 372 adresse des signaux de lecture sur le capteur 2. Pour chaque signal de ligne reçu du circuit décodeur de lignes 371, il commande simultanément 4 lignes contiguës, correspondant à autant de blocs 22 que la cellule 40 a de colonnes.

Le circuit de regroupement 373 réunit les informations relatives aux quatre colonnes de chacun des blocs 22 du capteur 2.
Cette fonction peut être assurée par des pseudo-capacités, telles que décrites par exemple dans le brevet US 5,541,654.

Chacune de ces pseudo-capacités présente une charge qui correspond à la somme des charges engendrées par les cellules photo-électriques d'un bloc 22. Ces charges sont appliquées au circuit d'amplification 374.

En variante, il est également possible de limiter l'information au signal issu d'une partie des cellules 21 de chaque bloc 22. Les circuit d'adressage 372 et de regroupement 373 sont ainsi simplifiés. La qualité de l'affichage est toutefois moins bonne.

A l'extrême, il est possible de prendre en compte des information provenant d'une seule des cellules d'un bloc. Dans ce cas, le circuit d'adressage de lignes 372 n'adresse des signaux de commande qu'à une ligne sur quatre, tandis que le circuit de regroupement 373 ne prend en compte que les signaux provenant d'une colonne sur quatre.

Le circuit d'amplification 374 comporte autant d'amplificateurs que la cellule 40 a de colonnes. Chacun de ces amplificateurs amplifie le signal correspondant à l'un des blocs 22 et l'applique à la colonne correspondante de la cellule 40. Cela se fait en synchronisme avec les signaux appliqués sur l'une de lignes de la cellule 40 et du capteur 2, sur la base des signaux de commande provenant du circuit de regroupement 373.

Le circuit de liaison 37 est agencé de manière que l'adressage des lignes de la cellule 40 se réalise parallèlement et séquentiellement avec l'adressage des lignes définies par les blocs 22 de cellules du capteur 2. Lorsqu'une ligne, respectivement un bloc de lignes est adressé, le capteur 2 génère autant de signaux analogiques qu'il compte de blocs 22 sur une ligne. Ces signaux sont adressés chacun à l'une des colonnes de la cellule d'affichage 40, au travers des amplificateurs du circuit d'amplification 374. De la sorte, le signal appliqué à chacune des colonnes de la cellule 40 a une tension correspondant à l'information à afficher.

Dans le mode de réalisation représenté à la figure 4, le circuit de liaison 37 permet de réduire 1e nombre d'éléments, par exemple le nombre de transistors. Ceci est rendu possible en réalisant un adressage multiplexé des colonnes. Il comprend, comme le circuit de la figure 3, un circuit décodeur 371, un circuit d'adressage de lignes 372, un circuit de regroupement de colonnes 373 et un circuit d'amplification 374.

Le taux de multiplexage m des colonnes est égal à un sous-multiple du nombre de colonnes que comporte la cellule d'affichage. Une telle solution permet de réduire le nombre d'amplificateurs et par là-même la surface du circuit de liaison 37, au dépens toutefois de la fréquence de balayage.

Pour effectuer ce multiplexage, le circuit 37 comporte en outre un premier et un second circuit de multiplexage portant respectivement la référence 375 et 376, avec chacun n décodeurs de colonnes. Le produit m.n est égal au nombre de colonnes de la cellule 40. Dans l'exemple de la figure 4, m est égal à 4 et n à 40.

Chacun des décodeurs de colonnes des circuits 375 et 376 est relié au microprocesseur 33 (non représenté) par une ligne d'incrémentation INC, qui assure le balayage des colonnes. La fréquence d'incrémentation est m fois supérieure à celle appliquée au circuit décodeur de lignes.

De manière plus précise, la commande de la cellule 40 est assurée comme suit.

Le décodeur de lignes 371 reçoit du processeur 33 des signaux d'incrémentation qui définissent l'activation séquentielle des 120 lignes de la cellule 40. En un instant donné tⱼ, le décodeur 371 active une ligne j (1 ≤ j ≤ 120). En l'instant tⱼ₊₁, le décodeur active la ligne j+1. Dans l'intervalle compris entre les instants tⱼ et tⱼ₊₁, la ligne j est activée et les n décodeurs de colonnes reçoivent chacun m signaux successifs d'incrémentation assurant le balayage des m colonnes commandées par chaque décodeur.

De la sorte, le nombre d'amplificateurs peut être réduit d'un facteur correspondant au taux m de multiplexage. Le temps nécessaire au balayage complet de la cellule en est augmenter d'un même facteur multiplicateur. En d'autres termes, l'utilisation ou non d'une commande multiplexée des colonnes est définie par un compromis prenant en compte d'une part la qualité d'affichage du viseur, d'autre part la surface disponible pour les circuits électroniques.

Il est rappelé pour mémoire que sur les deux figures 3 et 4, les signaux CLR permettent, de manière classique, d'initialiser ou d'interrompre un processus de transmission des informations.

Comme cela a été expliqué plus haut, la cellule d'affichage 40 du viseur 4 comporte moins de lignes que n'en compte le capteur 2. Il est également possible de réaliser un dispositif selon l'invention qui serait muni d'une cellule d'affichage ayant un nombre égal de lignes et de colonnes que le capteur 2. Dans ce cas, les circuits d'adressage de lignes 372 et de regroupement de colonnes 373 ne sont plus nécessaires.

Dans la solution telle que décrite, on constate donc que durant toute la phase de visée, le microprocesseur 33 se limite à adresser des signaux d'incrémentation. Par ailleurs, les convertisseurs analogique-digital 31 et digital-analogique 33, ainsi que les mémoires 32 et 36 ne sont pas mises à contribution. Cela permet une importante économie d'énergie électrique et par là une augmentation sensible de l'autonomie d'un tel appareil.

## Revendications

1. Appareil de prise de vue comportant :
- un objectif (1),
- un capteur (2) comprenant des cellules photoélectriques qui définissent chacune un pixel et organisées dans une première structure matricielle,
- un convertisseur analogique-digital (31),
- un microprocesseur (33),
- une mémoire (32),
- une cellule d'affichage électrooptique (40) à matrice de points organisés dans une seconde structure matricielle,
dans lequel les cellules photo-électriques du capteur (2) sont activées par un faisceau lumineux (5) focalisé par ledit objectif (1) et génèrent chacune un signal électrique fonction de l'intensité de la lumière captée,
dans lequel ledit convertisseur (31) transforme le signal électrique analogique issu desdites cellules photoélectriques en un signal numérique,
dans lequel ledit microprocesseur (33) traite les signaux issus dudit convertisseur (31) et les introduit dans la mémoire (32),
caractérisé en ce qu'il comporte en outre un circuit électronique de liaison (37), pour relier ledit capteur (2) à la cellule d'affichage (40), agencé de manière à amplifier les signaux de type analogique issus dudit capteur (2), pour pouvoir les appliquer, sous forme analogique, à ladite cellule d'affichage (40).

2. Appareil de prise de vue selon la revendication 1, caractérisé en ce que ladite première structure matricielle comporte un nombre de lignes et un nombre de colonnes qui sont un multiple du nombre de lignes et du nombre de colonnes de la seconde structure matricielle, en ce que les cellules photo-électriques (21) sont organisées en blocs ayant chacun un nombre de lignes et un nombre de colonnes égal audit multiple et en ce que ledit circuit de liaison (37) traite les signaux issus de l'une au moins des cellules photo-électriques de chacun desdits blocs pour l'appliquer à l'un des points (41) de la cellule d'affichage (40).

3. Appareil de prise de vue selon la revendication 2, caractérisé en ce que ledit circuit de liaison (37) est agencé pour combiner les signaux issus de toutes les cellules photo-électriques de chacun desdits blocs.

4. Appareil de prise de vue selon la revendication 2, caractérisé en ce que ledit circuit de liaison (37) est agencé pour combiner les signaux issus d'une partie seulement des cellules (21) de chacun desdits blocs.

5. Appareil de prise de vue selon la revendication 2, caractérisé en ce que ledit circuit de liaison (37) est agencé pour traiter les signaux issus d'une seule des cellules de chacun desdits blocs.

6. Appareil de prise de vue selon la revendication 2, caractérisé en ce que ledit circuit de liaison (37) comporte au moins un circuit d'amplification (374) avec au moins un amplificateur pour amplifier les signaux issus desdits blocs.

7. Appareil de prise de vue selon la revendication 6, caractérisé en ce que ledit circuit d'amplification (374) comporte autant d'amplificateurs que ladite seconde structure matricielle comporte de colonnes.

8. Appareil de prise de vue selon la revendication 6, caractérisé en ce que ledit circuit d'amplification (374) comporte un nombre d'amplificateurs sous-multiple du nombre de colonnes, et en ce que le circuit de liaison (37) comporte en outre des circuits de multiplexage (375, 376) avec chacun des circuits décodeurs de colonnes en nombre égal au rapport (m) entre le nombre de colonnes et le nombre d'amplificateurs, pour assurer une commande multiplexée des colonnes de ladite cellule d'affichage (40).

9. Appareil de prise de vue selon les revendications 6, 7 ou 8, caractérisé en ce que ledit circuit d'amplification (374) est non linéaire et permet d'adapter la réponse optique de la cellule d'affichage (40) à la réponse optique du capteur (2).
